# EUROPÄISCHE PATENTSCHRIFT

(11) **EP 4 377 180 B1**
(45) Veröffentlichungstag und Bekanntmachung des Hinweises auf die Patenterteilung: **26.03.2025**
(21) Anmeldenummer: 22734610.3
(22) Anmeldetag: 22.06.2022
(51) Int. Cl.: B60W 60/00, B60W 50/023, B60W 50/029, B60W 50/06

(54) **VERFAHREN UND VORRICHTUNG ZUM BETREIBEN EINES FAHRZEUGS IN EINEM AUTOMATISIERTEN FAHRBETRIEB**
METHOD AND DEVICE FOR OPERATING A VEHICLE IN AN AUTOMATED DRIVING MODE
PROCÉDÉ ET DISPOSITIF POUR FAIRE FONCTIONNER UN VÉHICULE DANS UN MODE DE CONDUITE AUTOMATISÉ

(30) Priorität: 27.07.2021 DE 102021003867
(43) Veröffentlichungstag der Anmeldung: 05.06.2024
(73) Patentinhaber: Mercedes-Benz Group AG, 70372 Stuttgart (DE)
(72) Erfinder: OLTMANN, Volker, 75365 Calw (DE); TOCHTERMANN, Nikolai, 71229 Leonberg (DE)
(74) Vertreter: Novagraaf Group
(86) Internationale Anmeldenummer: PCT/EP2022/067017
(87) Internationale Veröffentlichungsnummer: WO 2023/006304

(56) Entgegenhaltungen:
- DE-A1- 102016 006 137
- DE-A1- 102017 011 808
- "10bit Signal auf 8 bit runter manipulieren", 6 October 2015 (2015-10-06), XP002807336, Retrieved from the Internet <URL:https://www.mikrocontroller.net/topic/378404> [retrieved on 20220817]
- CHOI KYUNGRAK ET AL: "Bit-width reduction and customized register for low cost convolutional neural network accelerator", 2017 IEEE/ACM INTERNATIONAL SYMPOSIUM ON LOW POWER ELECTRONICS AND DESIGN (ISLPED), IEEE, 24 July 2017 (2017-07-24), pages 1 - 6, XP033142398, DOI: 10.1109/ISLPED.2017.8009164
- QING JIN ET AL: "AdaBits: Neural Network Quantization with Adaptive Bit-Widths", ARXIV.ORG, CORNELL UNIVERSITY LIBRARY, 201 OLIN LIBRARY CORNELL UNIVERSITY ITHACA, NY 14853, 20 December 2019 (2019-12-20), XP081621157

## Beschreibung

Die Erfindung betrifft ein Verfahren zum Betreiben eines Fahrzeugs in einem automatisierten Fahrbetrieb nach den Merkmalen des Oberbegriffs des Anspruchs 1 und eine Vorrichtung zur Durchführung des Verfahrens.

Aus dem Stand der Technik sind, wie in der DE 10 2017 011 808 A1 beschrieben, ein Verfahren zur Regelung der Bewegung eines Fahrzeugs in einem automatisierten Fahrbetrieb und eine Vorrichtung zur Durchführung des Verfahrens bekannt. Der automatisierte Fahrbetrieb ist von einem regulären Betriebsmodus, in dem das Fahrzeug automatisiert zu einer vorgegebenen Zielposition geführt wird, zu einem Notbetriebsmodus, in dem das Fahrzeug automatisiert zu einer Nothalteposition geführt wird, umschaltbar. Die Regelung wird im regulären Betriebsmodus mittels eines Hauptsteuergeräts und im Notbetriebsmodus mittels eines Nebensteuergeräts durchgeführt. Der automatisierte Fahrbetrieb wird vom regulären Betriebsmodus zum Notbetriebsmodus umgeschaltet, wenn im regulären Betriebsmodus eine Funktionsbeeinträchtigung des Hauptsteuergeräts festgestellt wird. Im regulären Betriebsmodus wird die Regelung basierend auf einer zur Zielposition führenden regulären Solltrajektorie durchgeführt, welche vom Hauptsteuergerät im regulären Betriebsmodus fortlaufend ermittelt wird. Im Notbetriebsmodus wird die Regelung basierend auf einer im Nebensteuergerät gespeicherten und zur Nothalteposition führenden Notbetriebs-Solltrajektorie durchgeführt, welche vom Hauptsteuergerät im regulären Betriebsmodus vor der Umschaltung des Betriebsmodus in den Notbetriebsmodus ermittelt worden ist und dem Nebensteuergerät zur Speicherung zugeführt worden ist. Im regulären Betriebsmodus wird neben der Notbetriebs-Solltrajektorie auch ein zur Notbetriebs-Solltrajektorie zugehöriger Spurverlauf einer vom Fahrzeug befahrenen Fahrspur ermittelt und dem Nebensteuergerät zur Speicherung zugeführt. Die Notbetriebs-Solltrajektorie und der zugehörige Spurverlauf werden in einem fahrzeugfesten Koordinatensystem des Hauptsteuergeräts ermittelt. Im Notbetriebsmodus wird der Spurverlauf der vom Fahrzeug befahrenen Fahrspur in einem fahrzeugfesten Koordinatensystem des Nebensteuergeräts ermittelt. Im Notbetriebsmodus wird, basierend auf dem im Nebensteuergerät gespeicherten Spurverlauf der Fahrspur und dem vom Nebensteuergerät ermittelten Spurverlauf der Fahrspur, eine Abweichung zwischen den Koordinatensystemen des Hauptsteuergeräts und des Nebensteuergeräts kompensiert.

In der DE 10 2015 003 124 A1 werden ein Verfahren und eine Vorrichtung zum Betreiben eines Fahrzeugs in einem automatisierten Fahrbetrieb beschrieben. Während einer Normalfunktion des automatisierten Fahrbetriebs wird fortlaufend eine Notfallsolltrajektorie ermittelt und gespeichert, die nach Eintritt zumindest eines vorgegebenen Fehlerereignisses einer automatisierten Trajektorienregelung des Fahrzeugs zugrunde gelegt werden soll. Bei einer erfolgten Detektion des Eintritts des zumindest einen vorgegebenen Fehlerereignisses wird ein Notfallbetriebsmodus aktiviert, in dem die automatisierte Trajektorienregelung des Fahrzeugs eingeleitet und gemäß der vor dem Eintritt des zumindest einen vorgegebenen Fehlerereignisses gespeicherten Notfallsolltrajektorie für eine vorgegebene Zeitdauer und/oder bis zum Stillstand des Fahrzeugs durchgeführt wird, falls und solange keine Fahrzeugführungsübernahme durch einen Fahrzeugführer des Fahrzeugs erfolgt.

In "10bit Signal auf 8 bit runter manipulieren", 6. Oktober 2015 (2015-10-06), XP002807336, Gefunden in Internet unter https://www.mikrocontroller.net/topic/378404 ist beschrieben, wie ein 10-Bit-Signal auf 8 Bit herunterskaliert werden kann.

Aus der Druckschrift K. Choi et al: "Bit-width reduction and customized register for low cost convolutional neural network accelerator, 2017 IEEE/ACM International Symposium on Low Power Electronics and Design (ISLPED), Taipei, Taiwan, 2017, pp. 1-6, doi: 10.1109/ISLPED.2017.8009164 ist ein Verfahren zur adaptiven Bitweitenreduktion bei einem neuronalen Netze bekannt.

Aus der Druckschrift Qing er al: "AdaBits: Neural Network Quantization With Adaptive Bit-Widths," ARXIV. ORG, CORNELL UNIVERSITY LIBRARY, 201 OLIN LIBRARY CORNELL UNIVERSITY ITHACA, NY 14853, 20. Dezember 2019, XP081621157, ist ein Verfahren zur adaptiven Festlegung von Bitbreiten von Gewichtungen und Aktivierungen eines neuronalen Netzes bekannt.

Aus der DE 10 2016 006 137 A1 ist ein Verfahren zur Lokalisierung eines Fahrzeugs bekannt, bei dem eine aktuelle Position des Fahrzeugs mittels eines satellitengestützten Navigationssystems ermittelt wird und ausgehend von der ermittelten Position in einer Koppelnavigation mittels Daten einer Inertialsensorik des Fahrzeugs eine zukünftige Position des Fahrzeugs prädiziert wird.

Der Erfindung liegt die Aufgabe zu Grunde, ein gegenüber dem Stand der Technik verbessertes Verfahren zum Betreiben eines Fahrzeugs in einem automatisierten Fahrbetrieb und eine gegenüber dem Stand der Technik verbesserte Vorrichtung zur Durchführung des Verfahrens anzugeben.

Die Aufgabe wird erfindungsgemäß gelöst durch ein Verfahren zum Betreiben eines Fahrzeugs in einem automatisierten Fahrbetrieb mit den Merkmalen des Anspruchs 1 und eine Vorrichtung zur Durchführung des Verfahrens mit den Merkmalen des Anspruchs 6.

Vorteilhafte Ausgestaltungen der Erfindung sind Gegenstand der Unteransprüche.

In einem Verfahren zum Betreiben eines Fahrzeugs in einem automatisierten Fahrbetrieb, insbesondere in einem hochautomatisierten oder autonomen Fahrbetrieb, wird in einem regulären Betriebsmodus mittels eines Hauptsteuergeräts regelmäßig, insbesondere fortlaufend, eine Solltrajektorie ermittelt, entlang der das Fahrzeug, insbesondere mittels des Hauptsteuergeräts, automatisiert zu einer vorgegebenen Zielposition geführt wird. Diese Zielposition ist insbesondere eine von mindestens einer Person, insbesondere von einem Nutzer des Fahrzeugs, gewünschte Zielposition. Sie wird beispielsweise von dieser Person oder auf andere Weise entsprechend vorgegeben.

Zudem wird in diesem regulären Betriebsmodus mittels des Hauptsteuergeräts, insbesondere parallel zur Ermittlung der Solltrajektorie, regelmäßig, insbesondere fortlaufend, eine Fahrvorgabe für einen Notbetriebsmodus ermittelt, die an ein Nebensteuergerät übertragen und dort gespeichert wird. Diese Fahrvorgabe wird auch als Rückfallpfad bezeichnet. Das Fahrzeug wird bei einem Ausfall des Hauptsteuergeräts mittels des Nebensteuergeräts im Notbetriebsmodus gemäß der Fahrvorgabe automatisiert in eine, insbesondere sichere, Halteposition geführt. Die Halteposition ist somit insbesondere eine Nothalteposition. Die Ermittlung der Fahrvorgabe erfolgt somit derart, dass dies, d. h. das Führen des Fahrzeugs im Notbetriebsmodus in die, insbesondere sichere, Halteposition, erreicht wird.

Erfindungsgemäß umfasst die Fahrvorgabe Informationen über einen Verlauf eines Pfads, auf dem das Fahrzeug in die, insbesondere sichere, Halteposition geführt werden soll, über einen Verlauf einer Geschwindigkeit, mit der das Fahrzeug auf dem Pfad geführt werden soll, und über eine Lage mindestens einer Spurmarkierung oder mehrerer Spurmarkierungen relativ zum Pfad. Der Verlauf des Pfads wird durch eine Reihe von Pfadpunkten bestimmt. Jedem Pfadpunkt ist mindestens ein Abstandswert oder genau ein Abstandswert zugeordnet, der einem Abstand des jeweiligen Pfadpunktes zur linken oder rechten Spurmarkierung entspricht. Insbesondere daraus ergibt sich die Lage der mindestens einen Spurmarkierung oder der mehreren Spurmarkierungen relativ zum Pfad. Beispielsweise kann auch vorgesehen sein, dass jedem Pfadpunkt zwei Abstandswerte zugeordnet sind, wobei der eine Abstandswert dem Abstand des jeweiligen Pfadpunktes zur linken Spurmarkierung und der andere Abstandswert dem Abstand des jeweiligen Pfadpunktes zur rechten Spurmarkierung entspricht. Die Abstandswerte werden als digitale Daten mit einer begrenzten Bitbreite zur Übertragung zum Nebensteuergerät bereitgestellt. Es ist somit eine maximale Bitbreite für die digitalen Daten der Abstandswerte vorgegeben, die nicht überschritten werden kann. Dadurch ist ein darstellbarer Wertebereich der Abstandswerte begrenzt. Es ist daher vorgesehen, dass, wenn eine Spurweite größer ist als der darstellbare Wertebereich der Abstandswerte, die Abstandswerte vor der Übertragung zum Nebensteuergerät durch eine Skalierung reduziert werden, insbesondere auf den mittels der begrenzten Bitbreite darstellbaren Wertebereich reduziert werden, und nach der Übertragung im Nebensteuergerät zurückgerechnet werden. Die Skalierung der Abstandswerte erfolgt insbesondere im Hauptsteuergerät. Die Spurweite bezieht sich dabei insbesondere auf eine Fahrspur, welche das Fahrzeug nutzen soll, d. h. auf welcher der Pfad verläuft. Die Spurweite wird insbesondere durch die linke und rechte Spurmarkierung vorgegeben, d. h. durch einen Markierungsabstand zwischen der linken und rechten Spurmarkierung, insbesondere zwischen der Innenkante der jeweiligen Spurmarkierung.

Eine erfindungsgemäße Vorrichtung ist zur Durchführung dieses Verfahrens ausgebildet und eingerichtet. Sie umfasst das Hauptsteuergerät und das Nebensteuergerät. Das Hauptsteuergerät ist dazu eingerichtet, im regulären Betriebsmodus regelmäßig die Solltrajektorie zu ermitteln und das Fahrzeug entlang der ermittelten Solltrajektorie automatisiert zur vorgegebenen Zielposition zu führen. Das Hauptsteuergerät ist zudem dazu eingerichtet, regelmäßig die Fahrvorgabe für den Notbetriebsmodus zu ermitteln und an das Nebensteuergerät zu übertragen, wobei die Fahrvorgabe Informationen über den Verlauf des Pfads, auf dem das Fahrzeug in die insbesondere sichere, Halteposition geführt werden soll, über den Verlauf der Geschwindigkeit, mit der das Fahrzeug auf dem Pfad geführt werden soll, und über die Lage mindestens einer Spurmarkierung relativ zum Pfad umfasst, wobei der Verlauf des Pfads durch eine Reihe von Pfadpunkten bestimmt wird, wobei jedem Pfadpunkt mindestens ein Abstandswert zugeordnet ist, der dem Abstand des jeweiligen Pfadpunktes zur linken oder rechten Spurmarkierung entspricht. Das Hauptsteuergerät ist des Weiteren dazu eingerichtet, die Abstandswerte als digitale Daten mit der begrenzten Bitbreite zur Übertragung zum Nebensteuergerät bereitzustellen, wodurch der darstellbare Wertebereich der Abstandswerte begrenzt ist. Das Hauptsteuergerät ist des Weiteren dazu eingerichtet, die Abstandswerte vor der Übertragung zum Nebensteuergerät durch eine Skalierung zu reduzieren, wenn die Spurweite größer ist als der darstellbare Wertebereich der Abstandswerte. Das Nebensteuergerät ist dazu eingerichtet, die Fahrvorgabe zu empfangen und zu speichern, das Fahrzeug bei Ausfall des Hauptsteuergeräts im Notbetriebsmodus gemäß der Fahrvorgabe automatisiert in die, insbesondere sichere, Halteposition zu führen, und die empfangenen Abstandswerte zurückzurechnen, wenn sie vor der Übertragung zum Nebensteuergerät durch die Skalierung reduziert wurden.

Durch die erfindungsgemäße Lösung wird eine datentechnische Bereitstellung der Fahrvorgabe für das Nebensteuergerät derart realisiert, dass die, insbesondere schnelle, korrekte und vollständige, Übertragung der Fahrvorgabe an das Nebensteuergerät mit einer möglichst geringen Bandbreite ermöglicht wird und/oder auch bei einer vorgegeben geringen Bandbreite einer Datenübertragungsverbindung zwischen dem Hauptsteuergerät und dem Nebensteuergerät jederzeit sichergestellt wird. Die Bandbreite, insbesondere die Datenrate, der Datenübertragungsverbindung ist beispielsweise auf einen Maximalwert begrenzt. Daher werden die Abstandswerte als digitale Daten mit begrenzter Bitbreite zur Übertragung zum Nebensteuergerät bereitgestellt, um die schnelle, korrekte und vollständige Übertragung der Fahrvorgabe vom Hauptsteuergerät zum Nebensteuergerät sicherzustellen. Daraus resultiert das Problem, dass Abstandswerte, die den mittels dieser begrenzten Bitbreite darstellbaren Wertebereich überschreiten, nicht übertragen werden können. Mittels der erfindungsgemäßen Lösung wird sichergestellt, dass auch bei solchen Abstandswerten, die den mittels dieser begrenzten Bitbreite darstellbaren Wertebereich überschreiten, die schnelle, korrekte und vollständige Übertragung der Fahrvorgabe erfolgt, indem die Abstandswerte vor der Übertragung zum Nebensteuergerät skaliert und dadurch auf den mittels der begrenzten Bitbreite darstellbaren Wertebereich reduziert werden, so dass die Übertragung an das Nebensteuergerät ermöglicht wird, und nach der Übertragung im Nebensteuergerät zurückgerechnet werden, wodurch die Fahrvorgabe im Nebensteuergerät korrekt und vollständig vorliegt. Durch die erfindungsgemäße Lösung wird insbesondere auch sichergestellt, dass das automatisierte Führen des Fahrzeugs sowohl im regulären Betriebsmodus als auch im Notbetriebsmodus nicht auf Fahrspuren mit einer vorgegebenen maximalen Spurweite begrenzt ist, sondern auf Fahrspuren mit beliebigen Spurweiten möglich ist, solange sie ausreichend breit zum Befahren durch das Fahrzeug sind.

In einer möglichen Ausführungsform des Verfahrens wird ein Skalierungsfaktor derart bestimmt, dass die Spurweite auf den darstellbaren Wertebereich der Abstandswerte abgebildet wird. In einer möglichen Ausführungsform der Vorrichtung ist das Hauptsteuergerät dazu eingerichtet, den Skalierungsfaktor derart zu bestimmen, dass die Spurweite auf den darstellbaren Wertebereich der Abstandswerte abgebildet wird. Dadurch wird die schnelle, korrekte und vollständige Übertragung der Fahrvorgabe vom Hauptsteuergerät an das Nebensteuergerät sichergestellt.

In einer möglichen Ausführungsform des Verfahrens wird der Skalierungsfaktor als ein Attribut der Fahrvorgabe ebenfalls zum Nebensteuergerät übertragen. In einer möglichen Ausführungsform der Vorrichtung ist das Hauptsteuergerät dazu eingerichtet, den Skalierungsfaktor als ein Attribut der Fahrvorgabe zum Nebensteuergerät zu übertragen, und das Nebensteuergerät ist dazu eingerichtet, den Skalierungsfaktor als Attribut der Fahrvorgabe zu empfangen. Dadurch wird das korrekte Zurückrechnen der, insbesondere im Hauptsteuergerät, durch die Skalierung reduzierten und danach an das Nebensteuergerät übertragenen Abstandswerte im Nebensteuergerät sichergestellt, da auf diese Weise sichergestellt ist, dass für die Skalierung im Hauptsteuergerät und für das Zurückrechnen im Nebensteuergerät der gleiche Skalierungsfaktor verwendet wird.

In einer möglichen Ausführungsform des Verfahrens werden oder sind Koordinaten der Pfadpunkte relativ zueinander in einem fahrzeugfesten Koordinatensystem definiert. In einer möglichen Ausführungsform der Vorrichtung ist das Hauptsteuergerät dazu eingerichtet, Koordinaten der Pfadpunkte relativ zueinander in einem fahrzeugfesten Koordinatensystem zu definieren. Dadurch wird eine korrekte Führung des Fahrzeugs mittels des Nebensteuergeräts im Notbetriebsmodus gemäß der Fahrvorgabe in die, insbesondere sichere, Halteposition sichergestellt, insbesondere, wenn das Nebensteuergerät ebenfalls das fahrzeugfeste Koordinatensystem verwendet.

In einer möglichen Ausführungsform des Verfahrens wird jedem Pfadpunkt ein Geschwindigkeitswert zugeordnet, der die gewünschte Geschwindigkeit am jeweiligen Pfadpunkt angibt, d. h. die Geschwindigkeit, die das Fahrzeug am jeweiligen Pfadpunkt aufweisen soll. In einer möglichen Ausführungsform der Vorrichtung ist das Hauptsteuergerät dazu eingerichtet, jedem Pfadpunkt einen Geschwindigkeitswert zuzuordnen, der die Geschwindigkeit angibt, die das Fahrzeug am jeweiligen Pfadpunkt aufweisen soll. Dadurch wird ein Verzögern des Fahrzeugs auf sichere Weise ermöglicht, insbesondere bis zum Stillstand in der, insbesondere sicheren, Halteposition.

Die Vorrichtung ist insbesondere ein Bestandteil des Fahrzeugs. Sie umfasst des Weiteren beispielsweise eine Umgebungserfassungssensorik, insbesondere mit einer Spurerfassungssensorik und/oder Spurmarkierungserfassungssensorik, eine Positionsbestimmungseinheit, insbesondere zur Bestimmung einer jeweils aktuellen Position des Fahrzeugs mittels mindestens eines globalen Navigationssattelitensystems, eine digitale Landkarte, eine Inertialsensorik, eine Antriebsaktorik, eine Bremsaktorik und/oder eine Lenkaktorik des Fahrzeugs. Die Umgebungserfassungssensorik umfasst als Umgebungserfassungssensoren beispielsweise mindestens eine Kamera, insbesondere Stereokamera, mindestens einen Lidarsensor, mindestens einen Radarsensor und/oder mindestens einen Ultraschallsensor. Es können auch mehrere Umgebungserfassungssensoren vom jeweiligen Sensortyp vorgesehen sein. Das Hauptsteuergerät und/oder das Nebensteuergerät sind jeweils mit mindestens einer, mehreren oder allen Komponenten der Vorrichtung gekoppelt. Dabei kann bezüglich der Kopplung der jeweiligen Komponente vorgesehen sein, dass das Hauptsteuergerät entweder direkt oder indirekt, insbesondere über das Nebensteuergerät, mit der jeweiligen Komponente gekoppelt ist und/oder dass das Nebensteuergerät entweder direkt oder indirekt, insbesondere über das Hauptsteuergerät, mit der jeweiligen Komponenten gekoppelt ist.

Im regulären Betriebsmodus wird das Fahrzeug mittels des Hauptsteuergeräts insbesondere durch eine Steuerung und/oder Regelung der Antriebsaktorik, Bremsaktorik und/oder Lenkaktorik des Fahrzeugs entlang der Solltrajektorie automatisiert zur vorgegebenen Zielposition geführt. Im Notbetriebsmodus wird das Fahrzeug mittels des Nebensteuergeräts, insbesondere durch eine Steuerung und/oder Regelung der Antriebsaktorik, Bremsaktorik und/oder Lenkaktorik des Fahrzeugs, gemäß der Fahrvorgabe in die, insbesondere sichere, Halteposition geführt.

Ausführungsbeispiele der Erfindung werden im Folgenden anhand von Zeichnungen näher erläutert.

Dabei zeigen:
- Fig. 1: schematisch ein Fahrzeug mit einer Vorrichtung zur Durchführung eines Verfahrens zum Betreiben des Fahrzeugs in einem automatisierten Fahrbetrieb,
- Fig. 2: schematisch eine Fahrvorgabe des Verfahrens,
- Fig. 3: schematisch ein Beispiel einer Fahrvorgabe und mittels einer Umgebungserfassungssensorik erfasster Spurmarkierungen,
- Fig. 4: schematisch ein weiteres Beispiel einer Fahrvorgabe und mittels einer Umgebungserfassungssensorik erfasster Spurmarkierungen, und
- Fig. 5: schematisch ein weiteres Beispiel einer Fahrvorgabe und mittels einer Umgebungserfassungssensorik erfasster Spurmarkierungen.

Einander entsprechende Teile sind in allen Figuren mit den gleichen Bezugszeichen versehen.

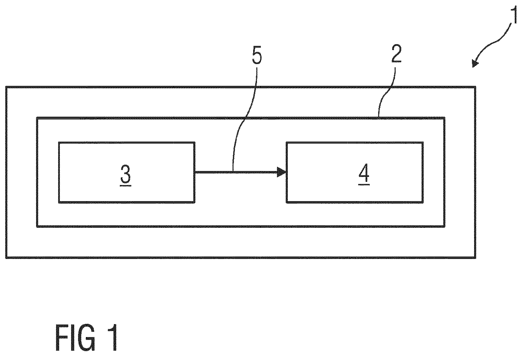

Anhand der Figuren 1 bis 5 werden im Folgenden ein Verfahren zum Betreiben eines Fahrzeugs 1 in einem automatisierten Fahrbetrieb und eine Vorrichtung 2 zur Durchführung des Verfahrens dargestellt. Dabei ist die Vorrichtung 2 als Bestandteil des Fahrzeugs 1 in Figur 1 stark schematisch vereinfacht dargestellt.

Die Vorrichtung 2 umfasst insbesondere ein Hauptsteuergerät 3 und ein Nebensteuergerät 4, wobei zwischen dem Hauptsteuergerät 3 und dem Nebensteuergerät 4 eine Datenübertragungsverbindung 5 vorgesehen ist, insbesondere zur Übertragung einer im Folgenden näher beschriebenen Fahrvorgabe vom Hauptsteuergerät 3 an das Nebensteuergerät 4.

Die Vorrichtung 2 kann zusätzlich noch weitere hier nicht näher dargestellte Komponenten umfassen, beispielsweise eine Umgebungserfassungssensorik, insbesondere mit einer Spurerfassungssensorik und/oder Spurmarkierungserfassungssensorik, eine Positionsbestimmungseinheit, insbesondere zur Bestimmung einer jeweils aktuellen Position des Fahrzeugs 1 mittels mindestens eines globalen Navigationssattelitensystems, eine digitale Landkarte, eine Inertialsensorik, eine Antriebsaktorik, eine Bremsaktorik und/oder eine Lenkaktorik des Fahrzeugs 1. Die Umgebungserfassungssensorik umfasst als Umgebungserfassungssensoren beispielsweise mindestens eine Kamera, insbesondere Stereokamera, mindestens einen Lidarsensor, mindestens einen Radarsensor und/oder mindestens einen Ultraschallsensor. Es können auch mehrere Umgebungserfassungssensoren vom jeweiligen Sensortyp vorgesehen sein. Der jeweilige Umgebungserfassungssensor der Umgebungserfassungssensorik kann auch ein Bestandteil der Spurerfassungssensorik und/oder Spurmarkierungserfassungssensorik sein. Für die Spurerfassungssensorik und/oder Spurmarkierungserfassungssensorik kommen insbesondere die Sensortypen Kamera und Lidarsensor in Betracht.

Das Hauptsteuergerät 3 und/oder das Nebensteuergerät 4 sind beispielsweise jeweils mit mindestens einer, mehreren oder allen Komponenten der Vorrichtung 2 gekoppelt. Dabei kann bezüglich der Kopplung der jeweiligen Komponente vorgesehen sein, dass das Hauptsteuergerät 3 entweder direkt oder indirekt, insbesondere über das Nebensteuergerät 4, mit der jeweiligen Komponente gekoppelt ist und/oder dass das Nebensteuergerät 4 entweder direkt oder indirekt, insbesondere über das Hauptsteuergerät 3, mit der jeweiligen Komponente gekoppelt ist.

Im Verfahren zum Betreiben des Fahrzeugs 1 im automatisierten Fahrbetrieb, insbesondere in einem hochautomatisierten oder autonomen Fahrbetrieb, wird in einem regulären Betriebsmodus mittels des Hauptsteuergeräts 3 regelmäßig, insbesondere fortlaufend, eine Solltrajektorie ermittelt, entlang der das Fahrzeug 1, insbesondere mittels des Hauptsteuergeräts 3, automatisiert zu einer vorgegebenen Zielposition geführt wird. Diese Zielposition ist insbesondere eine von mindestens einer Person, insbesondere von einem Nutzer des Fahrzeugs 1, gewünschte Zielposition. Sie wird beispielsweise von dieser Person oder auf andere Weise entsprechend vorgegeben. In diesem regulären Betriebsmodus wird das Fahrzeug 1 mittels des Hauptsteuergeräts 3 insbesondere durch eine Steuerung und/oder Regelung der Antriebsaktorik, Bremsaktorik und/oder Lenkaktorik des Fahrzeugs 1 entlang der Solltrajektorie automatisiert zur vorgegebenen Zielposition geführt.

Zudem wird in diesem regulären Betriebsmodus mittels des Hauptsteuergeräts 3, insbesondere parallel zur Ermittlung der Solltrajektorie, regelmäßig, insbesondere fortlaufend, beispielsweise in einem Zeitabstand von 40 ms, eine Fahrvorgabe für einen Notbetriebsmodus ermittelt, die an das Nebensteuergerät 4 übertragen und dort gespeichert wird. Diese Fahrvorgabe wird auch als Rückfallpfad bezeichnet. Das Fahrzeug 1 wird bei einem Ausfall des Hauptsteuergeräts 3 mittels des Nebensteuergeräts 4 im Notbetriebsmodus gemäß der Fahrvorgabe in eine, insbesondere sichere, Halteposition geführt. Die Halteposition ist somit insbesondere eine Nothalteposition. Die Ermittlung der Fahrvorgabe erfolgt somit derart, dass dies, d. h. das Führen des Fahrzeugs 1 im Notbetriebsmodus in die, insbesondere sichere, Halteposition, erreicht wird. Im Notbetriebsmodus wird das Fahrzeug 1 mittels des Nebensteuergeräts 4 insbesondere durch eine Steuerung und/oder Regelung der Antriebsaktorik, Bremsaktorik und/oder Lenkaktorik des Fahrzeugs 1 gemäß der Fahrvorgabe in die, insbesondere sichere, Halteposition geführt.

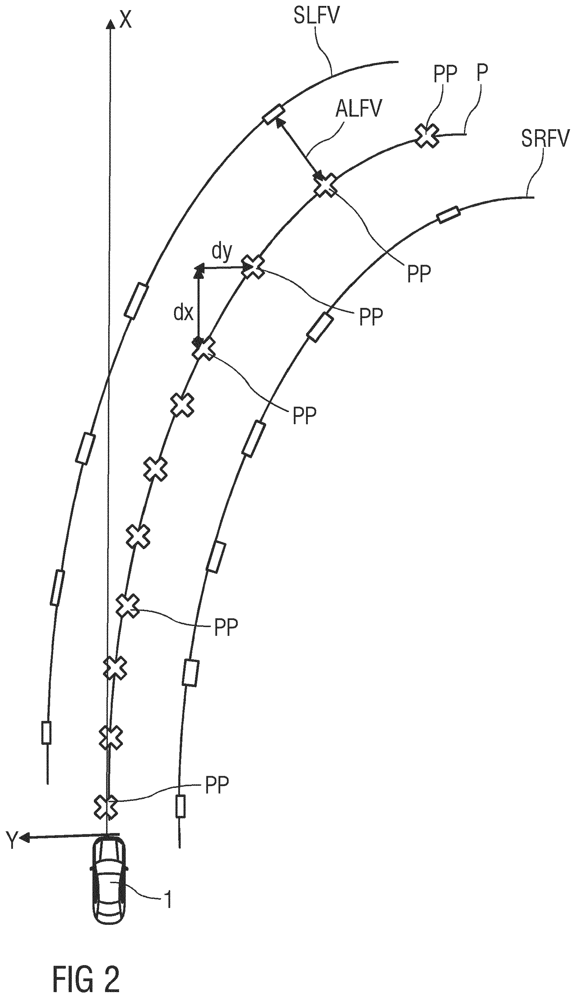

Die Fahrvorgabe umfasst Informationen über einen Verlauf eines Pfads P, auf dem das Fahrzeug 1 in die, insbesondere sichere, Halteposition geführt werden soll, über einen Verlauf einer Geschwindigkeit, mit der das Fahrzeug 1 auf dem Pfad P geführt werden soll, und über eine Lage mindestens einer Spurmarkierung SLFV, SRFV oder mehrerer Spurmarkierungen SLFV, SRFV relativ zum Pfad P. Wie in Figur 2 beispielhaft gezeigt, wird der Verlauf des Pfads P durch eine Reihe von Pfadpunkten PP bestimmt. Jedem Pfadpunkt PP ist ein Abstandswert zugeordnet, der einem Abstand ALFV, ARFV des jeweiligen Pfadpunktes PP zur linken oder rechten Spurmarkierung SLFV, SRFV entspricht. Daraus ergibt sich die Lage der mindestens einen Spurmarkierung SLFV, SRFV oder der mehreren Spurmarkierungen SLFV, SRFV relativ zum Pfad P.

Beispielsweise sind Koordinaten dx, dy der Pfadpunkte PP relativ zueinander in einem fahrzeugfesten Koordinatensystem definiert. Das fahrzeugfeste Koordinatensystem ist in Figur 2 mit der x-Achse X und der y-Achse Y dargestellt.

Beispielsweise ist zudem vorgesehen, dass jedem Pfadpunkt PP ein Geschwindigkeitswert zugeordnet wird, der die gewünschte Geschwindigkeit am jeweiligen Pfadpunkt PP angibt, d. h. die Geschwindigkeit, die das Fahrzeug 1 am jeweiligen Pfadpunkt PP aufweisen soll. Diese Geschwindigkeitswerte definieren den Verlauf der Geschwindigkeit und sind somit ebenfalls ein Bestandteil der Fahrvorgabe. In Figur 2 ist der dem, ausgehend vom Fahrzeug 1, letzten Pfadpunkt PP zugeordnete Geschwindigkeitswert beispielsweise 0 m/s, d. h. hier soll der Stillstand des Fahrzeugs 1 erreicht werden. Einem der dazwischenliegenden Pfadpunkte PP ist beispielsweise der Geschwindigkeitswert 10 m/s zugeordnet.

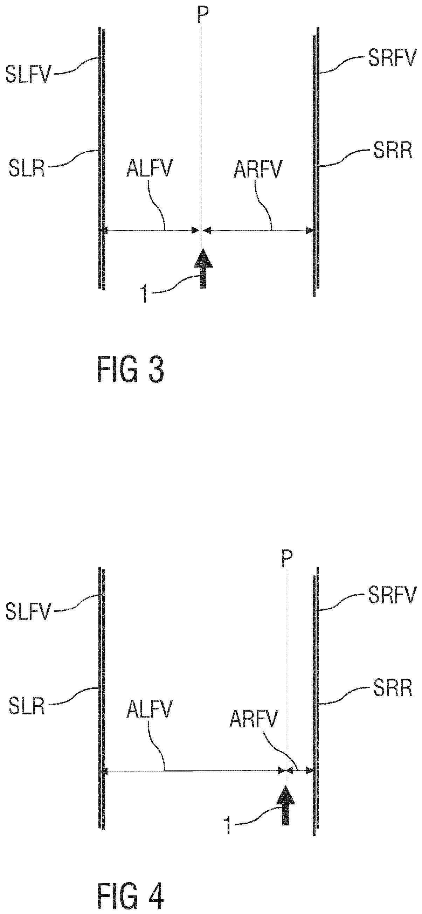

Die Abstandswerte werden als digitale Daten, allerdings mit einer begrenzten Bitbreite, zur Übertragung zum Nebensteuergerät 4 bereitgestellt. Dadurch ist ein darstellbarer Wertebereich der Abstandswerte begrenzt. Beispielsweise ist dieser Wertebereich auf vier Meter begrenzt. Die Figuren 3 und 4 zeigen zwei Beispiele, in denen dieser begrenzte Wertebereich ausreichend ist. Dargestellt sind hier jeweils der Pfad P der Fahrvorgabe, das Fahrzeug 1, welches schematisch als Pfeil dargestellt ist, Spurmarkierungen SLFV, SRFV gemäß Fahrvorgabe und mittels der Umgebungserfassungssensorik, insbesondere Spurerfassungssensorik und/oder Spurmarkierungserfassungssensorik, beispielsweise mittels einer Kamera, erfasste reale Spurmarkierungen SLR, SRR. Wie dargestellt, überlagern sich die Spurmarkierungen SLFV, SRFV gemäß Fahrvorgabe und die mittels der Umgebungserfassungssensorik erfassten realen Spurmarkierungen SLR, SRR oder sind, genauer gesagt, an einer Innenkante der realen Spurmarkierungen SLR, SRR positioniert.

Wenn jedoch eine Spurweite der Fahrspur, welche beispielsweise aus der digitalen Karte und/oder mittels der Umgebungserfassungssensorik ermittelt wird, so groß wird, dass die Abstandswerte für den Abstand ALFV, ARFV der Fahrvorgabe zur jeweiligen Spurmarkierung SLFV, SRFV gemäß Fahrvorgabe den darstellbaren Wertebereich überschreiten oder überschreiten könnten, dann wäre eine korrekte Übertragung der Abstand ALFV, ARFV der Fahrvorgabe nicht mehr möglich. Daher ist im hier beschriebenen Verfahren vorgesehen, dass, wenn die Spurweite größer ist als der darstellbare Wertebereich der Abstandswerte, die Abstandswerte vor der Übertragung zum Nebensteuergerät 4 durch eine Skalierung reduziert werden, insbesondere auf den mittels der begrenzten Bitbreite darstellbaren Wertebereich reduziert werden, und nach der Übertragung im Nebensteuergerät 4 zurückgerechnet werden. Die Skalierung der Abstandswerte erfolgt insbesondere im Hauptsteuergerät 3. Die Spurweite bezieht sich dabei insbesondere auf die Fahrspur, welche das Fahrzeug 1 nutzen soll, d. h. auf welcher der Pfad P verläuft. Die Spurweite wird insbesondere durch die linke und rechte reale Spurmarkierung SLR, SRR vorgegeben, d. h. durch einen Markierungsabstand zwischen der linken und rechten realen Spurmarkierung SLR, SRR.

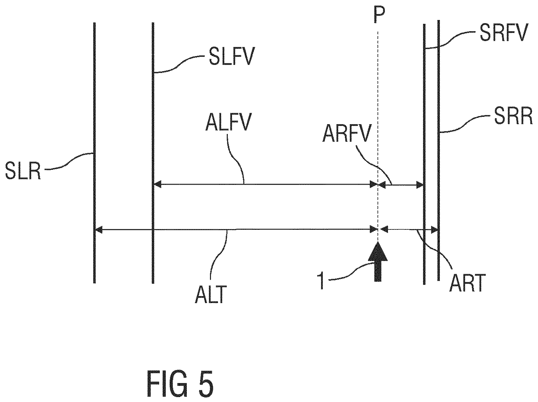

Figur 5 zeigt dies in einem Beispiel. Die Spurweite zwischen der linken und rechten realen Spurmarkierung SLR, SRR beträgt hier beispielsweise fünf Meter. Wie oben erwähnt, ist der darstellbare Wertebereich der Abstandswerte beispielsweise auf vier Meter begrenzt. Es wird daher die Skalierung vorgenommen. Dabei ist insbesondere vorgesehen, dass ein Skalierungsfaktor derart bestimmt wird, dass die Spurweite auf den darstellbaren Wertebereich der Abstandswerte abgebildet wird.

Der Skalierungsfaktor wird somit beispielsweise als Quotient mit dem Maximalwert des darstellbaren Wertebereichs, im Beispiel vier Meter, im Zähler und der Spurweite, im Beispiel fünf Meter, im Nenner berechnet. Der Skalierungsfaktor beträgt somit in diesem Beispiel 4/5, also 0,8.

Mit diesem Skalierungsfaktor werden somit ein jeweiliger tatsächlicher Abstand ALT, ART zur jeweiligen realen Spurmarkierung SLR, SRR in den jeweiligen reduzierten Abstand ALFV, ARFV der Fahrvorgabe umgerechnet. Im dargestellten Beispiel beträgt der tatsächliche linke Abstand ALT des Pfads P zur realen linken Spurmarkierung SLR 4,5 m und der tatsächliche rechte Abstand ART des Pfads P zur realen rechten Spurmarkierung SRR 0,5 m. Durch die Umrechnung mittels des Skalierungsfaktors 0,8, d. h. durch Multiplizieren des jeweiligen tatsächlichen Abstand ALT, ART mit diesem Skalierungsfaktor, ergibt sich für den reduzierten linken Abstand ALFV des Pfades P zur linken Spurmarkierung SLFV gemäß Fahrvorgabe ein Wert von 3,6 m und für den reduzierten rechten Abstand ARFV des Pfades P zur rechten Spurmarkierung SRFV gemäß Fahrvorgabe ein Wert von 0,4 m. Dadurch ist die jeweilige Spurmarkierung SLFV, SRFV gemäß Fahrvorgabe von der jeweiligen realen Spurmarkierung SLR, SRR beabstandet, wie in Figur 5 dargestellt.

Diese ermittelten reduzierten Abstandswerte werden vom Hauptsteuergerät 3 an das Nebensteuergerät 4 übertragen und dort wieder zurückgerechnet. Hierfür ist insbesondere vorgesehen, dass auch der Skalierungsfaktor, als ein Attribut der Fahrvorgabe, zum Nebensteuergerät 4 übertragen wird. Durch das Zurückrechnen der Abstandswerte im Nebensteuergerät 4 wird sichergestellt, dass nun die Spurmarkierungen SLFV, SRFV gemäß Fahrvorgabe wieder der jeweiligen realen Spurmarkierung SLR, SRR entsprechen, d. h. diese überlagern oder, wie in den Figuren 3 und 4 gezeigt, an der Innenkante der jeweiligen realen Spurmarkierung SLR, SRR positioniert sind, so dass eine exakte und sichere Führung des Fahrzeugs 1 mittels der Fahrvorgabe sichergestellt ist.

Durch die beschriebene Lösung wird eine datentechnische Bereitstellung der Fahrvorgabe für das Nebensteuergerät 4 derart realisiert, dass die, insbesondere schnelle, korrekte und vollständige, Übertragung der Fahrvorgabe an das Nebensteuergerät 4 mit einer möglichst geringen Bandbreite ermöglicht wird und/oder auch bei einer vorgegeben geringen Bandbreite der Datenübertragungsverbindung 5 zwischen dem Hauptsteuergerät 3 und dem Nebensteuergerät 4 jederzeit sichergestellt wird. Die Bandbreite, insbesondere die Datenrate, der Datenübertragungsverbindung 5 ist beispielsweise auf einen Maximalwert begrenzt. Daher werden die Abstandswerte als digitale Daten mit begrenzter Bitbreite zur Übertragung zum Nebensteuergerät 4 bereitgestellt, um die schnelle, korrekte und vollständige Übertragung der Fahrvorgabe vom Hauptsteuergerät 3 zum Nebensteuergerät 4 sicherzustellen. Daraus resultiert das Problem, dass Abstandswerte, die den mittels dieser begrenzten Bitbreite darstellbaren Wertebereich überschreiten, nicht übertragen werden können. Mittels der beschriebenen Lösung wird sichergestellt, dass auch bei solchen Abstandswerten, die den mittels dieser begrenzten Bitbreite darstellbaren Wertebereich überschreiten, die schnelle, korrekte und vollständige Übertragung der Fahrvorgabe erfolgt, indem die Abstandswerte vor der Übertragung zum Nebensteuergerät 4 skaliert und dadurch auf den mittels der begrenzten Bitbreite darstellbaren Wertebereich reduziert werden, so dass die Übertragung an das Nebensteuergerät 4 ermöglicht wird, und nach der Übertragung im Nebensteuergerät 4 zurückgerechnet werden, wodurch die Fahrvorgabe im Nebensteuergerät 4 korrekt und vollständig vorliegt. Durch die beschriebene Lösung wird insbesondere auch sichergestellt, dass das automatisierte Führen des Fahrzeugs 1 sowohl im regulären Betriebsmodus als auch im Notbetriebsmodus nicht auf Fahrspuren mit einer vorgegebenen maximalen Spurweite begrenzt ist, sondern auf Fahrspuren mit beliebigen Spurweiten möglich ist, solange sie ausreichend breit zum Befahren durch das Fahrzeug 1 sind.

Beispielsweise umfasst die Fahrvorgabe 64 Datensätze für 64 Pfadpunkte PP, mit den jeweiligen oben beschriebenen Informationen, insbesondere bezüglich des jeweiligen Pfadpunktes PP. Durch weniger Daten, insbesondere eine geringere Bitbreite, bezüglich des Abstandswertes des jeweiligen Pfadpunktes PP und somit des jeweiligen Datensatzes kann somit eine über die Datenübertragungsverbindung 5 zu übertragende Datenmenge und dadurch eine hierfür erforderliche Bandbreite erheblich reduziert werden.

Das Verfahren, insbesondere das automatisierte Führen des Fahrzeugs 1, kann auch durchgeführt werden, wenn nur eine reale Spurmarkierung SLR, SRR mittels der Umgebungserfassungssensorik erfasst wird und/oder nur die Fahrvorgabe nur eine Spurmarkierung SLFV, SRFV aufweist, zumindest dann, wenn die Spurweite konstant ist.

## Patentansprüche

1. Verfahren zum Betreiben eines Fahrzeugs (1) in einem automatisierten Fahrbetrieb, wobei
- in einem regulären Betriebsmodus mittels eines Hauptsteuergeräts (3) regelmäßig eine Solltrajektorie ermittelt wird, entlang der das Fahrzeug (1) automatisiert zu einer vorgegebenen Zielposition geführt wird, und regelmäßig eine Fahrvorgabe für einen Notbetriebsmodus ermittelt wird, die an ein Nebensteuergerät (4) übertragen und dort gespeichert wird,
- das Fahrzeug (1) bei einem Ausfall des Hauptsteuergeräts (3) mittels des Nebensteuergeräts (4) im Notbetriebsmodus gemäß der Fahrvorgabe automatisiert in eine Halteposition geführt wird und
- die Fahrvorgabe Informationen über einen Verlauf eines Pfads (P), auf dem das Fahrzeug (1) in die Halteposition geführt werden soll und Informationen über einen Verlauf einer Geschwindigkeit, mit der das Fahrzeug (1) auf dem Pfad (P) geführt werden soll, umfasst, wobei der Verlauf des Pfads (P) durch eine Reihe von Pfadpunkten (PP) bestimmt wird,
**dadurch gekennzeichnet, dass**
- die Fahrvorgabe zusätzlich Informationen über eine Lage mindestens einer Spurmarkierung (SLFV, SRFV) relativ zum Pfad (P) umfasst,
wobei
- jedem Pfadpunkt (PP) des Pfads (P) mindestens ein Abstandswert zugeordnet wird, der einem Abstand (ALFV, ARFV) des jeweiligen Pfadpunktes (PP) zur linken oder rechten Spurmarkierung (SLFV, SRFV) entspricht,
- die Abstandswerte als digitale Daten mit einer begrenzten Bitbreite zur Übertragung zum Nebensteuergerät (4) bereitgestellt werden, wodurch ein darstellbarer Wertebereich der Abstandswerte begrenzt wird,
- die Abstandswerte vor der Übertragung zum Nebensteuergerät (4) durch eine Skalierung reduziert werden und nach der Übertragung im Nebensteuergerät (4) zurückgerechnet werden, wenn eine Spurweite größer ist als der darstellbare Wertebereich der Abstandswerte.

2. Verfahren nach Anspruch 1,
**dadurch gekennzeichnet, dass** ein Skalierungsfaktor derart bestimmt wird, dass die Spurweite auf den darstellbaren Wertebereich der Abstandswerte abgebildet wird.

3. Verfahren nach Anspruch 2,
**dadurch gekennzeichnet, dass** der Skalierungsfaktor als ein Attribut der Fahrvorgabe zum Nebensteuergerät (4) übertragen wird.

4. Verfahren nach einem der vorhergehenden Ansprüche,
**dadurch gekennzeichnet, dass** Koordinaten (dx, dy) der Pfadpunkte (PP) relativ zueinander in einem fahrzeugfesten Koordinatensystem definiert werden.

5. Verfahren nach einem der vorhergehenden Ansprüche,
**dadurch gekennzeichnet, dass** jedem Pfadpunkt (PP) ein Geschwindigkeitswert zugeordnet wird, der die Geschwindigkeit angibt, die das Fahrzeug (1) am jeweiligen Pfadpunkt (PP) aufweisen soll.

6. Vorrichtung (2) zur Durchführung eines Verfahrens nach einem der vorhergehenden Ansprüche, umfassend ein Hauptsteuergerät (3) und ein Nebensteuergerät (4), wobei das Hauptsteuergerät (3) dazu eingerichtet ist,
- in einem regulären Betriebsmodus regelmäßig eine Solltrajektorie zu ermitteln und das Fahrzeug (1) entlang der ermittelten Solltrajektorie automatisiert zu einer vorgegebenen Zielposition zu führen,
- regelmäßig eine Fahrvorgabe für einen Notbetriebsmodus zu ermitteln und an das Nebensteuergerät (4) zu übertragen, wobei die Fahrvorgabe Informationen über einen Verlauf eines Pfads (P), auf dem das Fahrzeug (1) in eine Halteposition geführt werden soll, über einen Verlauf einer Geschwindigkeit, mit der das Fahrzeug (1) auf dem Pfad (P) geführt werden soll, und über eine Lage mindestens einer Spurmarkierung (SLFV, SRFV) relativ zum Pfad (P) umfasst, wobei der Verlauf des Pfads (P) durch eine Reihe von Pfadpunkten (PP) bestimmt wird, wobei jedem Pfadpunkt (PP) mindestens ein Abstandswert zugeordnet ist, der einem Abstand (ALFV, ARFV) des jeweiligen Pfadpunktes (PP) zur linken oder rechten Spurmarkierung (SLFV, SRFV) entspricht,
- die Abstandswerte als digitale Daten mit einer begrenzten Bitbreite zur Übertragung zum Nebensteuergerät (4) bereitzustellen, wodurch ein darstellbarer Wertebereich der Abstandswerte begrenzt ist,
- die Abstandswerte vor der Übertragung zum Nebensteuergerät (4) durch eine Skalierung zu reduzieren, wenn eine Spurweite größer ist als der darstellbare Wertebereich der Abstandswerte,
wobei das Nebensteuergerät (4) dazu eingerichtet ist,
- die Fahrvorgabe zu empfangen und zu speichern,
- das Fahrzeug (1) bei einem Ausfall des Hauptsteuergeräts (3) im Notbetriebsmodus gemäß der Fahrvorgabe automatisiert in die Halteposition zu führen,
- die empfangenen Abstandswerte zurückzurechnen, wenn sie vor der Übertragung zum Nebensteuergerät (4) durch die Skalierung reduziert wurden.

7. Vorrichtung (2) nach Anspruch 6,
**dadurch gekennzeichnet, dass** das Hauptsteuergerät (3) dazu eingerichtet ist, einen Skalierungsfaktor derart zu bestimmen, dass die Spurweite auf den darstellbaren Wertebereich der Abstandswerte abgebildet wird.

8. Vorrichtung (2) nach Anspruch 7,
**dadurch gekennzeichnet, dass** das Hauptsteuergerät (3) dazu eingerichtet ist, den Skalierungsfaktor als ein Attribut der Fahrvorgabe zum Nebensteuergerät (4) zu übertragen und das Nebensteuergerät (4) dazu eingerichtet ist, den Skalierungsfaktor als Attribut der Fahrvorgabe zu empfangen.

9. Vorrichtung (2) nach einem der Ansprüche 6 bis 8,
**dadurch gekennzeichnet, dass** das Hauptsteuergerät (3) dazu eingerichtet ist, Koordinaten (dx, dy) der Pfadpunkte (PP) relativ zueinander in einem fahrzeugfesten Koordinatensystem zu definieren.

10. Vorrichtung (2) nach einem der Ansprüche 6 bis 9,
**dadurch gekennzeichnet, dass** das Hauptsteuergerät (3) dazu eingerichtet ist, jedem Pfadpunkt (PP) einen Geschwindigkeitswert zuzuordnen, der die Geschwindigkeit angibt, die das Fahrzeug (1) am jeweiligen Pfadpunkt (PP) aufweisen soll.

## Claims

1. Method for operating a vehicle (1) in an automated driving operation,
- in a regular operating mode, by means of a main control unit (3), a target trajectory being regularly ascertained, along which target trajectory the vehicle (1) is guided in an automated manner to a predetermined target position, and a driving specification for an emergency operating mode being regularly ascertained, which driving specification is transmitted to a secondary control unit (4) and stored there,
- the vehicle (1) being guided in an automated manner, in the event of a failure of the main control unit (3), into a stop position by means of the secondary control unit (4) in emergency mode according to the driving specification and
- the driving specification comprising information about a course of a path (P) on which the vehicle (1) is to be guided into the stop position and information about a course of a speed at which the vehicle (1) is to be guided on the path (P), the course of the path (P) being determined by a series of path points (PP),
**characterized in that**
- the driving specification additionally comprises information about a position of at least one lane marking (SLFV, SRFV) relative to the path (P),
- each path point (PP) of the path (P) being assigned at least one distance value which corresponds to a distance (ALFV, ARFV) of the relevant path point (PP) to the left or right lane marking (SLFV, SRFV),
- the distance values being provided as digital data which have a limited bit width for transmission to the secondary control unit (4), thereby limiting a representable value range of the distance values,
- the distance values being reduced by scaling before transmission to the secondary control unit (4) and being recalculated in the secondary control unit (4) after transmission if a lane width is greater than the representable value range of the distance values.

2. Method according to claim 1,
**characterized in that** a scaling factor is determined such that the lane width is mapped to the representable value range of the distance values.

3. Method according to claim 2,
**characterized in that** the scaling factor is transmitted to the secondary control unit (4) as an attribute of the driving specification.

4. Method according to any of the preceding claims,
**characterized in that** coordinates (dx, dy) of the path points (PP) are defined relative to one another in a vehicle-fixed coordinate system.

5. Method according to any of the preceding claims,
**characterized in that** each path point (PP) is assigned a speed value which indicates the speed that the vehicle (1) should have at the relevant path point (PP).

6. Device (2) for carrying out a method according to any of the preceding claims, comprising a main control unit (3) and a secondary control unit (4), wherein the main control unit (3) is configured to:
- in a regular operating mode, regularly ascertain a target trajectory and guide the vehicle (1) in an automated manner along the ascertained target trajectory to a predetermined target position,
- regularly ascertain a driving specification for an emergency operating mode and transmit it to the secondary control unit (4), wherein the driving specification comprises information about a course of a path (P) on which the vehicle (1) is to be guided into a stop position, about a course of a speed at which the vehicle (1) is to be guided on the path (P) and about a position of at least one lane marking (SLFV, SRFV) relative to the path (P), wherein the course of the path (P) is determined by a series of path points (PP), wherein each path point (PP) is assigned at least one distance value which corresponds to a distance (ALFV, ARFV) of the relevant path point (PP) to the left or right lane marking (SLFV, SRFV),
- provide the distance values as digital data which have a limited bit width for transmission to the secondary control unit (4), thereby limiting a representable value range of the distance values,
- reduce the distance values by scaling before transmission to the secondary control unit (4) if a lane width is greater than the representable value range of the distance values,
wherein the secondary control device (4) is configured to:
- receive and store the driving specification,
- guide the vehicle (1) in an automated manner into the stop position in emergency mode according to the driving specification in the event of a failure of the main control unit (3),
- recalculate the received distance values if they have been reduced by scaling before transmission to the secondary control unit (4).

7. Device (2) according to claim 6,
**characterized in that** the main control unit (3) is configured to determine a scaling factor such that the lane width is mapped to the representable value range of the distance values.

8. Device (2) according to claim 7,
**characterized in that** the main control unit (3) is configured to transmit the scaling factor to the secondary control unit (4) as an attribute of the driving specification and the secondary control unit (4) is configured to receive the scaling factor as an attribute of the driving specification.

9. Device (2) according to any of claims 6 to 8,
**characterized in that** the main control unit (3) is configured to define coordinates (dx, dy) of the path points (PP) relative to one another in a vehicle-fixed coordinate system.

10. Device (2) according to any of claims 6 to 9,
**characterized in that** the main control unit (3) is configured to assign to each path point (PP) a speed value which indicates the speed that the vehicle (1) should have at the relevant path point (PP).

## Revendications

1. Procédé permettant de faire fonctionner un véhicule (1) dans un fonctionnement de conduite automatisé, dans lequel
- dans un mode de fonctionnement régulier, on détermine régulièrement au moyen d'un appareil de commande principal (3) une trajectoire de consigne le long de laquelle le véhicule (1) est guidé de manière automatisée vers une position cible prédéfinie, et une consigne de conduite est régulièrement déterminée pour un mode de fonctionnement d'urgence, laquelle est transmise à un appareil de commande secondaire (4) et y est mémorisée,
- en cas de défaillance de l'appareil de commande principal (3), le véhicule (1) est guidé de manière automatisée dans une position d'arrêt au moyen de l'appareil de commande secondaire (4) en mode de fonctionnement d'urgence conformément à la consigne de conduite, et
- la consigne de conduite comprend des informations sur une progression d'un chemin (P) sur lequel le véhicule (1) doit être guidé dans la position d'arrêt et des informations sur une progression d'une vitesse à laquelle le véhicule (1) doit être guidé sur le chemin (P), dans lequel la progression du chemin (P) est définie par une série de points de chemin (PP),
**caractérisé en ce que**
- la consigne de conduite comprend en outre des informations sur un emplacement d'au moins un marquage de voie (SLFV, SRFV) par rapport au chemin (P),
dans lequel
- une valeur de distance est associée à chaque point de chemin (PP) du chemin (P), laquelle correspond à une distance (ALFV, ARFV) entre le point de chemin (PP) respectif et le marquage de voie (SLFV, SRFV) gauche ou droit,
- les valeurs de distance sont mises à disposition sous forme de données numériques comportant une largeur de bit limitée pour leur transmission à l'appareil de commande secondaire (4), moyennant quoi une plage de valeurs pouvant être représentée des valeurs de distance est limitée,
- les valeurs de distance sont réduites par une mise à l'échelle avant leur transmission à l'appareil de commande secondaire (4) et sont recalculées dans l'appareil de commande secondaire (4) après leur transmission lorsqu'une largeur de voie est supérieure à la plage de valeurs pouvant être représentée des valeurs de distance.

2. Procédé selon la revendication 1,
**caractérisé en ce qu'**un facteur de mise à l'échelle est défini de telle sorte que la largeur de voie est reproduite sur la plage de valeurs pouvant être représentée des valeurs de distance.

3. Procédé selon la revendication 2,
**caractérisé en ce que** le facteur de mise à l'échelle est transmis à l'appareil de commande secondaire (4) en tant qu'attribut de la consigne de conduite.

4. Procédé selon l'une des revendications précédentes,
**caractérisé en ce que** des coordonnées (dx, dy) des points de chemin (PP) sont définies les unes par rapport aux autres dans un système de coordonnées solidaire du véhicule.

5. Procédé selon l'une des revendications précédentes,
**caractérisé en ce qu'**une valeur de vitesse est associée à chaque point de chemin (PP), laquelle indique la vitesse à laquelle le véhicule (1) doit aller au niveau du point de chemin (PP) respectif.

6. Dispositif (2) pour la mise en œuvre d'un procédé selon l'une des revendications précédentes, comprenant un appareil de commande principal (3) et un appareil de commande secondaire (4), dans lequel l'appareil de commande principal (3) est configuré pour
- déterminer régulièrement une trajectoire de consigne dans un mode de fonctionnement régulier et guider de manière automatisée le véhicule (1) le long de la trajectoire de consigne déterminée vers une position cible prédéfinie,
- déterminer régulièrement une consigne de conduite pour un mode de fonctionnement d'urgence et la transmettre à l'appareil de commande secondaire (4), dans lequel la consigne de conduite comprend des informations sur une progression d'un chemin (P) sur lequel le véhicule (1) doit être guidé dans une position d'arrêt, sur une progression d'une vitesse à laquelle le véhicule (1) doit être guidé sur le chemin (P), et sur un emplacement d'au moins un marquage de voie (SLFV, SRFV) par rapport au chemin (P), dans lequel la progression du chemin (P) est définie par une série de points de chemin (PP), dans lequel une valeur de distance est associée à chaque point de chemin (PP), laquelle correspond à une distance (ALFV, ARFV) entre le point de chemin (PP) respectif et le marquage de voie (SLFV, SRFV) gauche ou droit,
- mettre à disposition les valeurs de distance sous forme de données numériques comportant une largeur de bit limitée pour leur transmission à l'appareil de commande secondaire (4), moyennant quoi une plage de valeurs pouvant être représentée des valeurs de distance est limitée,
- réduire les valeurs de distance par une mise à l'échelle avant leur transmission à l'appareil de commande secondaire (4) lorsqu'une largeur de voie est supérieure à la plage de valeurs pouvant être représentée des valeurs de distance,
dans lequel l'appareil de commande secondaire (4) est configuré pour
- recevoir et enregistrer la consigne de conduite,
- en cas de défaillance de l'appareil de commande principal (3), guider de manière automatisée le véhicule (1) dans la position d'arrêt en mode de fonctionnement d'urgence conformément à la consigne de conduite,
- recalculer les valeurs de distance reçues lorsqu'elles ont été réduites par la mise à l'échelle avant leur transmission à l'appareil de commande secondaire (4).

7. Dispositif (2) selon la revendication 6,
**caractérisé en ce que** l'appareil de commande principal (3) est configuré pour définir un facteur de mise à l'échelle de telle sorte que la largeur de voie est reproduite sur la plage de valeurs pouvant être représentée des valeurs de distance.

8. Dispositif (2) selon la revendication 7,
**caractérisé en ce que** l'appareil de commande principal (3) est configuré pour transmettre le facteur de mise à l'échelle en tant qu'attribut de la consigne de conduite à l'appareil de commande secondaire (4) et l'appareil de commande secondaire (4) est configuré pour recevoir le facteur de mise à l'échelle en tant qu'attribut de la consigne de conduite.

9. Dispositif (2) selon l'une des revendications 6 à 8,
**caractérisé en ce que** l'appareil de commande principal (3) est configuré pour définir les unes par rapport aux autres des coordonnées (dx, dy) des points de chemin (PP) dans un système de coordonnées solidaire du véhicule.

10. Dispositif (2) selon l'une des revendications 6 à 9,
**caractérisé en ce que** l'appareil de commande principal (3) est configuré pour associer une valeur de vitesse à chaque point de chemin (PP), laquelle indique la vitesse à laquelle le véhicule (1) doit aller au niveau du point de chemin (PP) respectif.
